# EUROPEAN PATENT APPLICATION

(11) **EP 3 354 903 A1**
(43) Date of publication of application: **01.08.2018**
(21) Application number: 18153874.5
(22) Date of filing: 29.01.2018
(51) Int. Cl.: F04D 17/06, F04D 25/08, F04D 29/44, F04D 29/58, H02K 7/14, H02K 9/14, F04D 29/42, A47L 9/28

(54) **BLOWER AND CLEANER**

(30) Priority: 31.01.2017 JP 2017015726
(71) Applicant: Nidec Corporation, Minami-ku, Kyoto-shi, Kyoto 601-8205 (JP)
(72) Inventor: HAYAMITSU, Ryosuke, Kyoto, Kyoto 601-8205 (JP)
(74) Representative: Zimmermann, Tankred Klaus

(57) **Abstract**

A blower (1) includes an impeller (3) that rotates around a central axis (C) extending in an up-down direction; a motor (5) that is disposed at one side in the up-down direction with respect to the impeller, and rotates the impeller; a motor housing (4) that houses the motor; a fan casing (2) that houses the impeller and the motor housing, and forms a first flow passage (FW1) between the fan casing and the motor housing; and a substrate (7) disposed at the one side in the up-down direction with respect to the impeller. One and the other end portions in the up-down direction of the fan casing respectively have first and second openings (22, 211) communicating with one another via the first flow passage. A capacitor (8) is disposed on the substrate, at least a portion of the capacitor overlapping the first flow passage in plan view.

## Description

### Field of the Invention

The present disclosure relates to a blower and a cleaner.

### Description of the Related Art

Conventionally, a motor includes a capacitor. For example, Japanese Unexamined Patent Application Publication No. 2004-254449 discloses a rotary motor as follows. The rotary motor includes a stator core fitted to the inner peripheral faces of upper and lower frames. A coil is wound around teeth of the stator core. A ring-shaped space is formed between the outer peripheral face in the circumferential direction of the coil and the inner peripheral wall face of the upper frame. An arcuate capacitor is disposed in the ring-shaped space.

In this case, if the rotary motor of aforementioned Japanese Unexamined Patent Application Publication No. 2004-254449 is used for a blower, an impeller is fixed to a rotatable shaft of the rotary motor. However, since the capacitor is housed in the inner space formed of the upper and lower frames, even when the impeller is rotationally driven, the airflow generated by the impeller is not guided to the capacitor. Therefore, it is not considered to efficiently cool the capacitor in aforementioned Japanese Unexamined Patent Application Publication No. 2004-254449.

### SUMMARY OF THE INVENTION

According to an exemplarily embodiment of the present disclosure, there is provided a blower including an impeller that rotates around a central axis extending in an up-down direction; a motor that is disposed at one side in the up-down direction with respect to the impeller, and rotates the impeller; a motor housing that houses the motor; a fan casing that houses the impeller and the motor housing, and forms a first flow passage between the fan casing and the motor housing; and a substrate disposed at the one side in the up-down direction with respect to the impeller. One end portion and the other end portion in the up-down direction of the fan casing respectively have a first opening and a second opening, the first opening communicating with the second opening via the first flow passage. A capacitor is disposed on the substrate. At least a portion of the capacitor overlaps the first flow passage in plan view.

Another exemplarily embodiment of the present disclosure is a cleaner, and the cleaner includes the above-described blower.

With the exemplarily embodiments of the present disclosure, the blower capable of efficiently cooling the capacitor, and the cleaner including the blower can be provided.

The above and other elements, features, steps, characteristics and advantages of the present discloser will become more apparent from the following detailed description of the preferred embodiments with reference to the attached drawings.

### BRIEF DESCRIPTION OF THE DRAWINGS

Fig. 1 is a perspective view of a cleaner according to an embodiment of the present disclosure;
Fig. 2 is a perspective view of the entirety of a blower according to the embodiment of the present disclosure;
Fig. 3 is a side-surface cross-sectional view of the blower according to the embodiment of the present disclosure;
Fig. 4 is a perspective view illustrating a state in which a fan casing is removed from the blower;
Fig. 5 is a perspective view illustrating a state in which an impeller and an upper housing are further removed from the state in Fig. 4;
Fig. 6 is a perspective view of the upper housing from above;
Fig. 7 is a perspective view of the upper housing from below;
Fig. 8 is a perspective view of a lower housing from above;
Fig. 9 is a plan cross-sectional view of the blower from above in a state in which the blower is cut along a cutting plane perpendicular to the up-down direction at a middle position in the up-down direction of the upper housing;
Fig. 10 is a cross-sectional perspective view of the blower from above in a state in which the blower is cut along a cutting plane perpendicular to the up-down direction at a lower middle position of the lower housing;
Fig. 11 is a partial cross-sectional perspective view of a blower including a capacitor according to a modification; and
Fig. 12 is a side-surface cross-sectional view of a blower according to another embodiment.

### DETAILED DESCRIPTION OF THE PREFERRED EMBODIMENTS

Exemplarily embodiments of the present disclosure are described below with reference to the drawings. In this description, a direction in which the central axis of a blower extends is named "up-down direction," a direction orthogonal to the central axis of the blower is named "radial direction," and a direction extending along an arc centered at the central axis of the blower is named "circumferential direction." However, the "up-down direction" does not limit the direction when the blower is actually assembled in a device. Also, "upstream" and "downstream" respectively represent upstream and downstream in a circulation direction of the air sucked from an air inlet port when an impeller is rotated.

In this description, for a cleaner, the shapes of components and the positional relationships among the components are described while a direction toward a floor surface is named "downward," and a direction away from the floor surface is named "upward." It is to be noted that the directions are names merely used for the explanation, and are not used for limiting the actual positional relationships and directions. Also, "upstream" and "downstream" respectively represent upstream and downstream in a circulation direction of the air sucked from an air inlet port when a blower is driven.

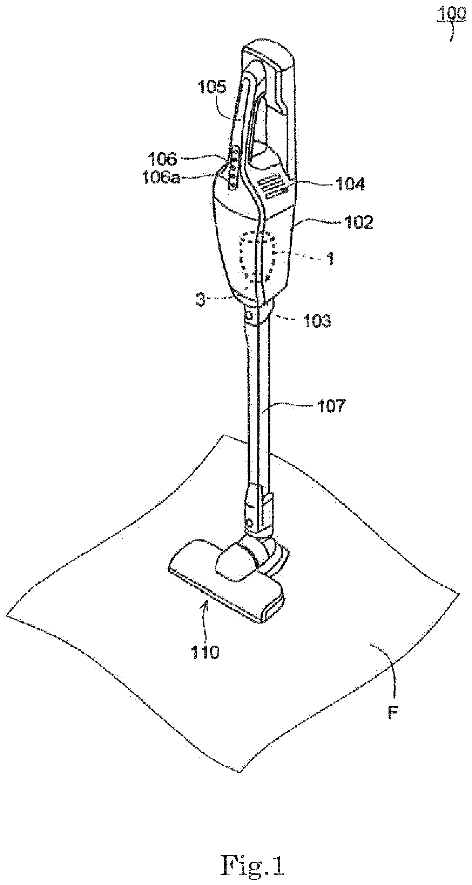

Now, a cleaner according to an exemplarily embodiment of the present disclosure is described. Fig. 1 is a perspective view of the cleaner according to the embodiment of the present disclosure. A cleaner 100 illustrated in Fig. 1 is a stick-shaped electric cleaner. The cleaner 100 includes a casing 102 having an air inlet port 103 open at a lower surface of the casing 102 and an air outlet port 104 open at an upper surface of the casing 102. A power cable (not illustrated) extends from a rear surface of the casing 102. The power cable is connected to a power receptacle (not illustrated) provided at a side wall surface of a room, and supplies the cleaner 100 with electric power. The cleaner 100 may be a robot-shaped, canister-shaped, or handy electric cleaner.

An air passage (not illustrated) that couples the air inlet port 103 with the air outlet port 104 is formed in the casing 102. In the air passage, a dust collector (not illustrated), a filter (not illustrated), and a blower 1 are disposed in that order from the upstream side toward the downstream side. The blower 1 includes an impeller 3. Dust and other substances contained in the air circulating in the air passage are blocked by the filter and collected in the dust collector formed in a container shape. The dust collector and the filter are removably attached to the casing 102.

A handle 105 and an operation part 106 are provided at an upper section of the casing 102. A user can hold the handle 105 and move the cleaner 100. The operation part 106 has a plurality of buttons 106a. The user makes operational setting of the cleaner 100 by operating the buttons 106a. For example, by operating the buttons 106a, start of driving, stop of driving, change of the rotation speed of the blower 1, and so forth, are instructed. A downstream end (in the drawing, upper end) of a rod-shaped suction pipe 107 is connected to the air inlet port 103. A suction nozzle 110 is attached to an upstream end of the suction pipe 107 in a removable manner from the suction pipe 107. Dust on a floor surface F is sucked into the suction pipe 107 through the suction nozzle 110.

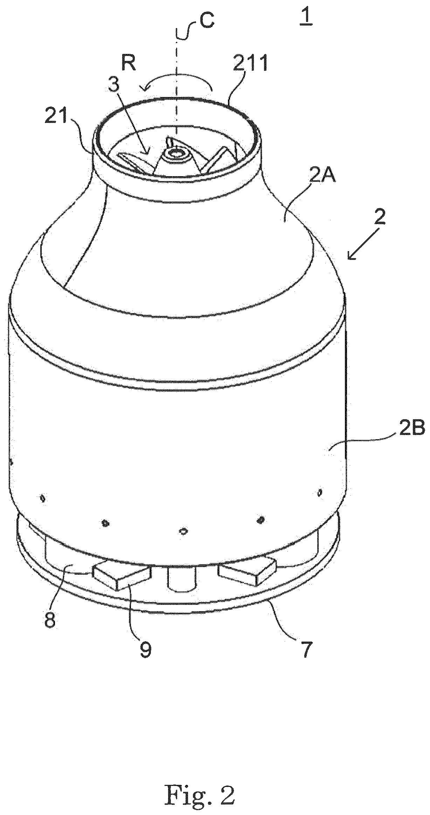

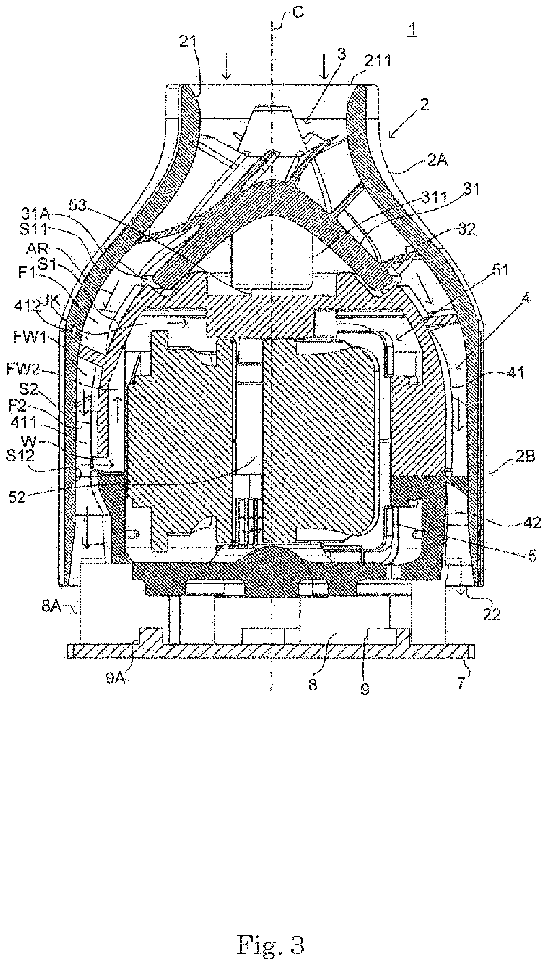

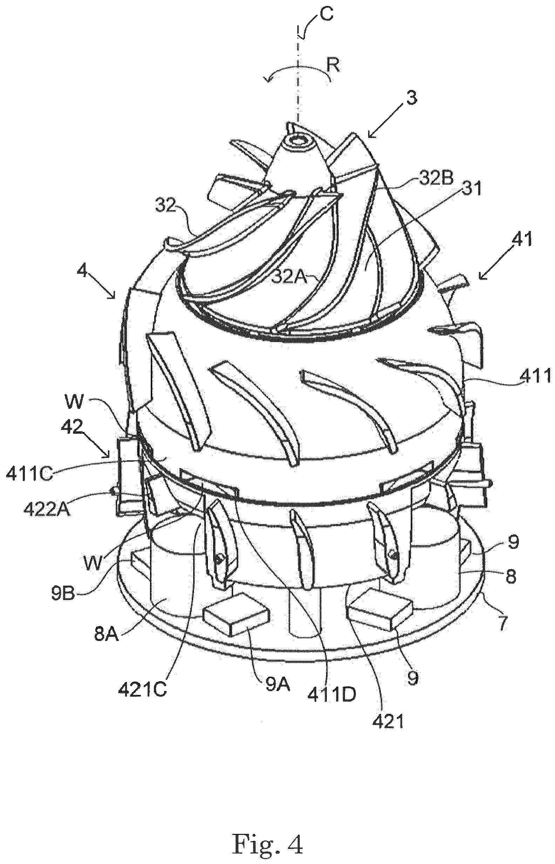

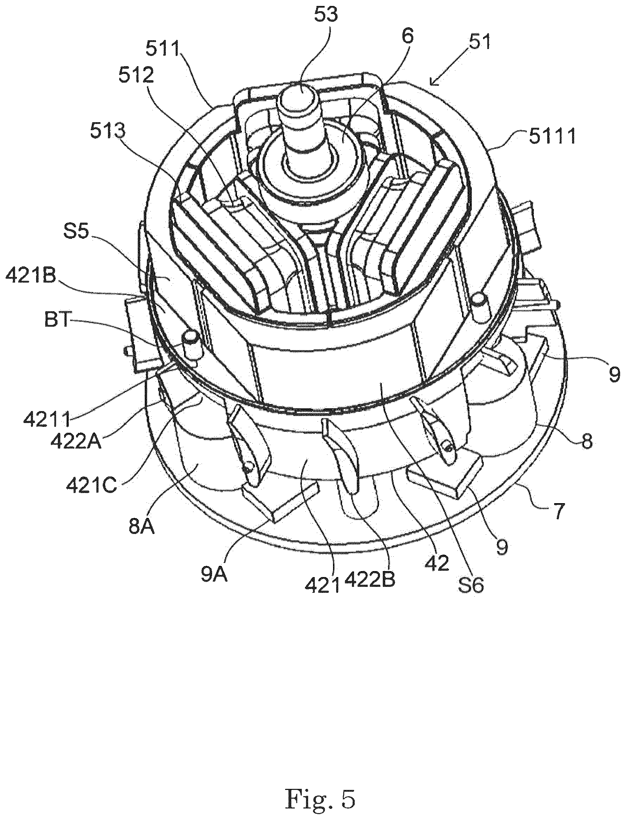

Next, the entire configuration of the blower 1 is described. Fig. 2 is a perspective view of the entirety of the blower 1 according to the embodiment of the present disclosure. Fig. 3 is a side-surface cross-sectional view of the blower 1. Fig. 4 is a perspective view illustrating a state in which a fan casing 2 is removed from the blower 1. Fig. 5 is a perspective view illustrating a state in which the impeller 3 and an upper housing 41 are further removed from the state in Fig. 4. A central axis C of the blower 1 extends in the up-down direction. The positional relationships and so forth are described while the upper side of the paper face in Fig. 2 is assumed as "upper side."

The blower 1 mainly includes a fan casing 2, an impeller 3, a motor housing 4, a motor 5, an upper bearing 6, a lower bearing (not illustrated), a substrate 7, a capacitor 8, and a field-effect transistor (FET) 9. The impeller 3 is rotationally driven by the motor 5 in a rotation direction R around the central axis C. The air is sucked into the fan casing 2 from the upper side, and is discharged from the fan casing 2 to the lower side.

The blower 1 has a cylindrical fan casing 2 having a circular cross section in plan view. The fan casing 2 houses the impeller 3 and the motor housing 4. The fan casing 2 includes an upper case part 2A and a lower case part 2B. The upper case part 2A and the lower case part 2B are formed as the same member.

A bell mouth 21 is provided at an upper end portion of the upper case part 2A. The bell mouth 21 is bent inward from an upper end and extends downward. An air inlet port 211 is provided at the upper end of the bell mouth 21. The air inlet port 211 is open in the up-down direction. The air inlet port 211 is located above an upper end of the impeller 3. Also, an air outlet port 22 is provided at a lower end of the lower case part 2B. The air outlet port 22 is open in the up-down direction.

The impeller 3 is a mixed impeller formed of a resin molded part. The impeller 3 includes a base portion 31 and a plurality of blades 32. The base portion 31 has a diameter that increases as the base portion 31 extends downward.

The base portion 31 has a boss 311 protruding downward. The boss 311 has a hole (not illustrated) extending upward from a lower end thereof. The hole is coupled to a shaft 53 (described later), and the impeller 3 is rotated in the rotation direction R around the central axis C.

The plurality of blades 32 are arrayed in the circumferential direction on an outer peripheral surface of the base portion 31. The blades 32 and the base portion 31 are formed as the same member. Upper portions of the blades 32 are disposed forward in the rotation direction R of lower portions of the blades 32. Outer end portions 32B of the blades 32 are disposed forward in the rotation direction R of bottom portions 32A of the blades 32.

The motor housing 4 includes an upper housing 41 and a lower housing 42. The upper housing 41 is disposed above the lower housing 42. The motor housing 4 houses the motor 5.

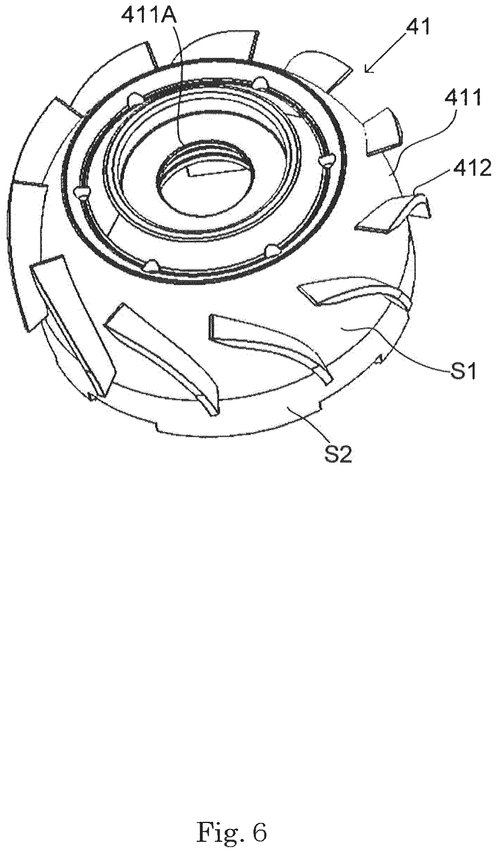

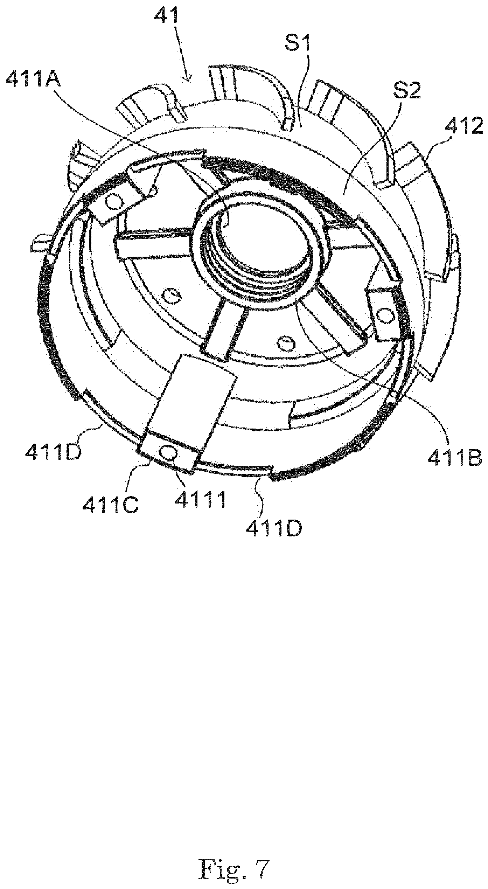

Fig. 6 is a perspective view of the upper housing 41 from above. Fig. 7 is a perspective view of the upper housing 41 from below. The upper housing 41 has a cup-shaped base part 411. The base part 411 has a curved surface S1 located at the upper side, and a column surface S2 located at the lower side.

A hole 411A is provided at the center of an upper end portion of the base part 411. The hole 411A is open in the up-down direction. A bearing holder 411B is provided below the hole 411A. The bearing holder 411B protrudes downward and is disposed at the inner side of the base part 411. The bearing holder 411B holds therein the upper bearing 6 (Fig. 5). The upper bearing 6 is formed of a ball bearing; however, may be formed of a sleeve bearing or other type of bearing.

Three columnar protrusions 411C are provided at an inner peripheral surface of the base part 411. The columnar protrusions 411C protrude inward in the radial direction from the inner peripheral surface of the base part 411 and extend in columnar shapes in the up-down direction. The columnar protrusions 411C are provided with screw holes 4111 extending upward from lower ends thereof. The three columnar protrusions 411C are arrayed at equivalent intervals in the circumferential direction.

Recesses 411D recessed upward are provided at both adjacent positions in the circumferential direction of each of the columnar protrusions 411C.

A plurality of stator blades 412 are arrayed in the circumferential direction on the curved surface S1 of the base part 411. The stator blades 412 have plate shapes, and are more inclined in a direction opposite to the rotation direction R of the impeller 3 as the stator blades 412 extend upward. The stator blades 412 are curved so that portions thereof protrude toward the impeller 3 side. The stator blades 412 guide the airflow downward when the blower 1 is driven.

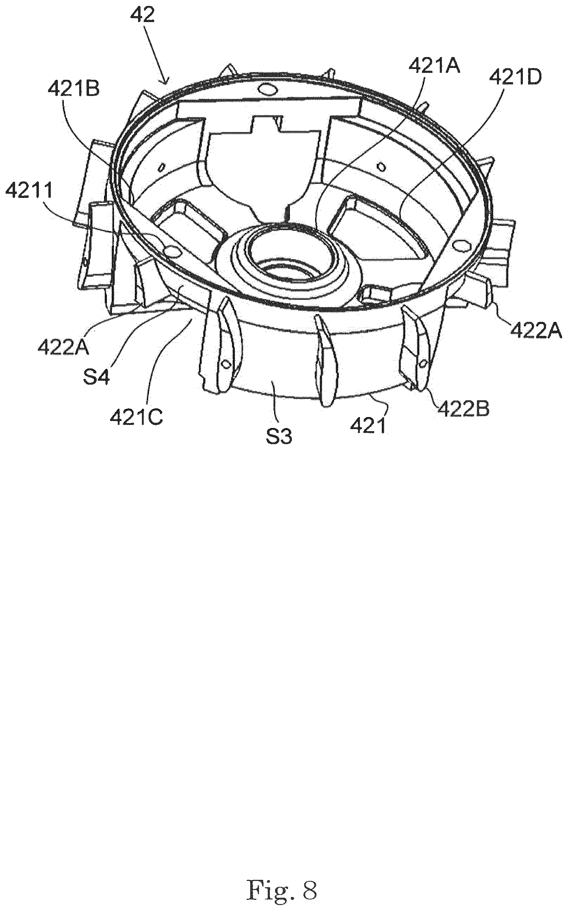

Fig. 8 is a perspective view of the lower housing 42 from above. The lower housing 42 has a cup-shaped base part 421 having a bottom portion. A bearing holder 421A is provided at the center of the bottom portion of the base part 421. The lower bearing (not illustrated) is held at the bearing holder 421A. The lower bearing is formed of a ball bearing like the upper bearing 6; however, may be formed of a sleeve bearing or other type of bearing.

A plurality of air outlet ports 421D are disposed at the bottom portion of the base part 421, at the outer side in the radial direction of the bearing holder 421A. The air outlet ports 421D are open in the up-down direction. The air outlet ports 421D are openings for discharging the air which has cooled the stator 51, which will be described later.

Three bases 421B protruding inward in the radial direction are provided on an inner peripheral surface of the base part 421. The bases 421B are disposed at equal intervals in the circumferential direction. The bases 421B each have a screw hole 4211 extending therethrough in the up-down direction.

In the base part 421, a motor-housing recess 421C recessed upward is provided below each of the bases 421B. Accordingly, an outer peripheral surface of the motor-housing recess 421C is disposed between two first outer peripheral surfaces S3 adjacent in the circumferential direction. An outer peripheral surface of the base part 421 has a second outer peripheral surface S4 disposed above the motor-housing recess 421C.

A plurality of first stator blades 422B are arrayed in the circumferential direction on the first outer peripheral surfaces S3. The first stator blades 422B extend in the up-down direction and are curved to protrude in the rotation direction R. Second stator blades 422A are provided on the second outer peripheral surfaces S4. The three second outer peripheral surfaces S4 disposed in the circumferential direction include a surface provided with one second stator blade 422A and a surface provided with two second stator blades 422A. The second stator blade 422A has the same shape as the shape of an upper portion forming part of each first stator blade 422B.

The first stator blades 422B and the second stator blades 422A guide the airflow downward when the blower 1 is driven. In particular, the second stator blades 422A are used for efficiently cooling the capacitor 8, which will be described later.

The motor 5 housed in the motor housing 4 is disposed below the impeller 3. The motor 5 includes a stator 51, a rotor 52, and a shaft 53. As illustrated in Fig. 5, the stator 51 has a stator core 511, a plurality of coils 512, and a plurality of insulators 513.

The stator core 511 is formed by stacking electromagnetic steel sheets in the up-down direction. The stator core 511 has a ring-shaped core back 5111 and a plurality of teeth (not illustrated). The plurality of teeth are radially formed to extend inward in the radial direction from an inner peripheral surface of the core back 5111. The teeth have a substantially T-like shape in plan view. Each coil 512 is wound around the periphery of the corresponding teeth via the corresponding insulator 513 having insulating properties.

Portions of the inner peripheral surface of the core back 5111 and third outer peripheral surfaces S5 near the bottoms of the teeth are flat surfaces. Accordingly, a coil can be prevented from being loosened. Also, portions of the inner peripheral surface of the core back 5111 and fourth outer peripheral surfaces S6 other than the portions thereof near the bottoms of the teeth are curved surfaces. Inner side surfaces of the bases 421B of the lower housing 42 are flat surfaces. The third outer peripheral surfaces S5 of the core back 5111 contact the inner side surfaces. Accordingly, the core back 5111 is held by the lower housing 42.

The columnar protrusions 411C of the upper housing 41 contact the third outer peripheral surfaces S5. The upper housing 41 is mounted on the lower housing 42. The columnar protrusions 411C of the upper housing 41 are mounted on the bases 421B of the lower housing 42. The screw holes 4111 of the columnar protrusions 411C and the screw holes 4211 of the bases 421B are located continuously in the up-down direction. Bolts BT (Fig. 5) are inserted into the screw holes 4211 and the screw holes 4111 from below and screwed thereto. Accordingly, the upper housing 41 is fixed to the lower housing 42 by the bolts BT.

In the state in which the upper housing 41 is fixed to the lower housing 42, an inlet port W (Fig. 4) extending in the radial direction is formed by the recesses 411D and the base 421B, at both adjacent positions in the circumferential direction of each of the columnar protrusions 411C. The effect of the inlet port W will be described later.

The rotor 52 is disposed at the inner side in the radial direction of the stator 51. That is, the motor 5 is of inner rotor type. The rotor 52 includes a cylindrical rotor housing and a plurality of magnets. The plurality of magnets are disposed on an outer peripheral surface of the rotor housing.

The shaft 53 extending in the up-down direction is fixed to the rotor housing of the rotor 52. The shaft 53 is rotatably held by the upper bearing 6 and the lower bearing (not illustrated). An upper end portion of the shaft 53 is inserted into the hole of the boss 311 of the impeller 3, and is fixed to the boss 311.

The substrate 7 having a disk-like shape is disposed below the lower housing 42 (Fig. 4). The substrate 7 is formed of a rigid substrate or a flexible substrate. Three capacitors 8 are arrayed at equal intervals in the circumferential direction and mounted on an upper surface of the substrate 7. On the upper surface of the substrate 7, field-effect transistors (FETs) 9 are mounted at both adjacent positions in the circumferential direction of each of the capacitors 8. That is, the FETs 9 are provided by six in total.

The capacitors 8 each have a columnar shape extending upward and inward of the corresponding motor-housing recess 421C of the lower housing 42 from the substrate 7 side. That is, the motor housing 4 has the motor-housing recesses 421C recessed in the up-down direction. At least a portion of the capacitor 8 is housed in each motor-housing recess 421C. Accordingly, the length in the up-down direction of the blower 1 can be decreased.

A wire (not illustrated) extending from the coil 512 is electrically connected to a driving circuit (not illustrated) formed on the substrate 7. Accordingly, the coil 512 can be supplied with electric power.

Next, the configuration relating to a passage through which the airflow circulates in the blower 1 is described particularly with reference to Fig. 3.

The curved surface S1 (Fig. 6) is formed at the outer peripheral surface of the base part 411 of the upper housing 41. The curved surface S1 extends in a curved manner downward and outward in the radial direction from a portion located below an outer end portion 31A in the radial direction of the base portion 31 of the impeller 3. A curved surface S11 is formed at the inner peripheral surface of the upper case part 2A of the fan casing 2. The curved surface S11 extends in a curved manner downward and outward in the radial direction. A curved portion F1 is formed as a space defined between the curved surface S11 and the curved surface S1.

The column surface S2 of the outer peripheral surface of the base part 411 of the upper housing 41 extends downward continuously from the curved surface S1. The outer peripheral surface of the base part 421 of the lower housing 42 extends downward at a position below the column surface S2. The outer peripheral surface of the base part 421 is formed of the three first outer peripheral surfaces S3 and the three second outer peripheral surfaces S4 as illustrated in Fig. 8. Also, a column surface S12 is formed at the inner peripheral surface of the lower case part 2B of the fan casing 2. The column surface S12 extends downward. An extending portion F2 is formed as a space defined between the column surface S12, and the column surface S2 and the outer peripheral surface of the base part 421. The extending portion F2 communicates with the curved portion F1 and extends downward.

A first flow passage FW1 is formed by the above-described curved portion F1 and extending portion F2. The first flow passage FW1 may have a space portion in addition to the curved portion F1 and the extending portion F2.

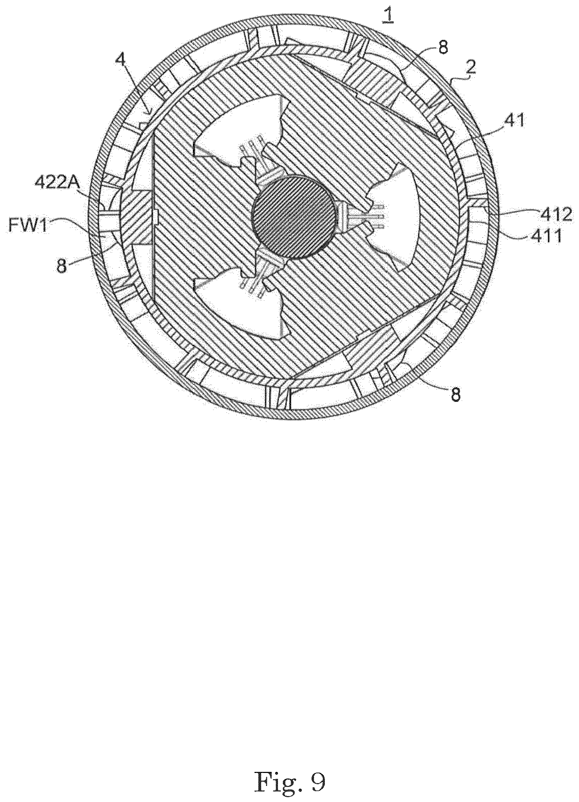

Fig. 9 is a plan cross-sectional view of the blower 1 from above in a state in which the blower 1 is cut along a cutting plane perpendicular to the up-down direction at a middle position in the up-down direction of the upper housing 41. As illustrated in Fig. 9, a portion of each capacitor 8 is disposed at a position between the inner peripheral surface of the fan casing 2 and the outer peripheral surface of the motor housing 4 in plan view. That is, the portion of the capacitor 8 overlaps the first flow passage FW1 in plan view.

When the coil 512 of the motor 5 is supplied with electric power, the rotor 52 and the shaft 53 are rotated. The impeller 3 is rotationally driven in the rotation direction R around the central axis C. Then, the air is sucked to the inside from the air inlet port 211 of the fan casing 2, and the air is accelerated downward at the outer side in the radial direction by the rotating impeller 3. The accelerated air blows downward of the impeller 3. The air (airflow AR) blowing downward of the impeller 3 flows into the curved portion F1. The air flowing into the curved portion F1 is guided downward by the stator blades 412, and flows into the extending portion F2. The air flowing into the extending portion F2 is guided downward by the first stator blades 422B and the second stator blades 422A, and is discharged downward through the air outlet port 22 of the fan casing 2. That is, the air sucked by the impeller 3 passes through the first flow passage FW1 and is discharged to the outside from the air outlet port 22.

At this time, a portion of the capacitor 8 overlaps the first flow passage FW1 in plan view as described above. The air passing through the first flow passage FW1 is guided to the capacitor 8. Accordingly, the capacitor 8 can be efficiently cooled during the air-sending operation by the rotational driving of the impeller 3.

That is, the blower 1 according to this embodiment includes the impeller 3, the motor 5, the motor housing 4, the fan casing 2, and the substrate 7. The impeller 3 rotates around the central axis C extending in the up-down direction. The motor 5 is disposed at one side in the up-down direction with respect to the impeller 3, and rotates the impeller 3. The motor housing 4 houses the motor 5. The fan casing 2 houses the impeller 3 and the motor housing 4, and forms the first flow passage FW1 between the fan casing 2 and the motor housing 4. The substrate 7 is disposed at the one side in the up-down direction with respect to the impeller 3. One end portion and the other end portion in the up-down direction of the fan casing 2 respectively have a first opening (air outlet port 22) and a second opening (air inlet port 211). The first opening communicates with the second opening via the first flow passage FW1. The capacitor 8 is disposed on the substrate 7. At least a portion of the capacitor 8 overlaps the first flow passage FW1 in plan view.

The first flow passage FW1 has the curved portion F1 extending in the up-down direction and outward in the radial direction from the outer end portion 31A in the radial direction of the impeller 3, and the extending portion F2 communicating with the curved portion F1 and extending in the up-down direction. Accordingly, the air smoothly circulates in the curved portion F1, and a decrease in air-sending efficiency which may occur due to a turbulence of the airflow can be restricted.

In this embodiment, the capacitor 8 is disposed on the upper surface of the substrate 7. That is, the capacitor 8 is disposed on a surface at the other side in the up-down direction of the substrate 7. Accordingly, the air can be further brought into contact with the capacitor 8, and hence the cooling efficiency of the capacitor 8 can be increased.

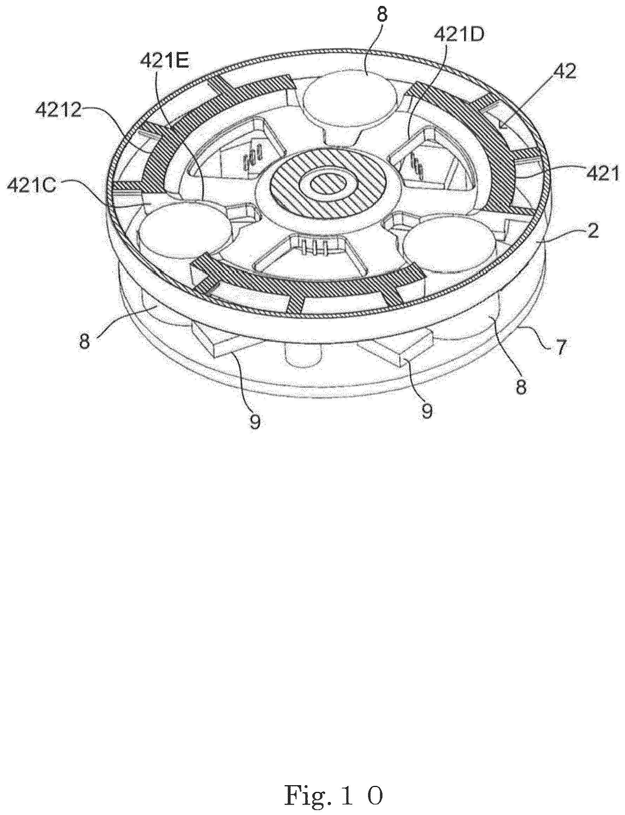

Fig. 10 is a cross-sectional perspective view of the blower 1 from above in a state in which the blower 1 is cut along a cutting plane perpendicular to the up-down direction at a lower middle position of the lower housing 42. As illustrated in Fig. 10, the lower housing 42 has a cylindrical portion 4212 extending in the up-down direction, as a portion of the base part 421. Also, recesses 421E are formed at the bottom portion of the base part 421 of the lower housing 42. The recesses 421E are recessed inward in the radial direction continuously from the motor-housing recesses 421C. An upper end portion of the capacitor 8 is housed in each of the motor-housing recesses 421C, and is housed in the corresponding recess 421E. That is, the portion of the capacitor 8 is disposed at the inner side in the radial direction with respect to the cylindrical portion 4212 in plan view.

As described above, in this embodiment, the motor housing 4 forms the first flow passage FW1 and includes the cylindrical portion 4212 extending in the up-down direction. At least the portion of the capacitor 8 is disposed at the inner side in the radial direction with respect to the cylindrical portion 4212 in plan view. Accordingly, the capacitor 8 can be increased in size without increasing the blower 1 in size in the radial direction.

In this embodiment, the first stator blades 422B and the second stator blades 422A are arrayed in the circumferential direction on the outer peripheral surface of the base part 421 of the lower housing 42. That is, the plurality of stator blades are disposed in the circumferential direction on the outer peripheral surface of the motor housing 4. Accordingly, the air-sending efficiency through the first flow passage FW1 can be increased, and the capacitors 8 can be efficiently cooled.

A portion of an upper surface of a capacitor 8A illustrated in Fig. 4 of the three capacitors 8 faces one of the second stator blades 422A in the up-down direction. That is, at least a portion of the capacitor 8A faces the second stator blade 422A in the up-down direction. Accordingly, the air can be efficiently guided to the capacitor 8 by the stator blade 422A, and hence the cooling efficiency of the capacitor 8 can be increased.

Regarding the residual two capacitors 8 other than the capacitor 8A, a portion of an upper surface of one capacitor 8 faces one of the second stator blades 422A in the up-down direction. Also, the two second stator blades 422A are located above the other capacitor 8. The capacitor 8 is disposed at a position between the two second stator blades 422A in plan view. That is, the upper surface of that capacitor 8 does not face the second stator blade 422A in the up-down direction. Alternatively, all capacitors may face the stator blades, or all capacitors may not face the stator blades.

In this embodiment, on the upper surface of the substrate 7, the FETs 9 are mounted at both adjacent positions in the circumferential direction of each of the capacitors 8. That is, the FETs 9 are disposed near the capacitor 8 on the surface of the substrate 7 on which the capacitors 8 are disposed. Accordingly, the air guided to the capacitors 8 is also supplied to the FETs 9, and hence the FETs 9 can be efficiently cooled. In particular, FETs 9A and 9B are disposed at both adjacent positions in the circumferential direction of the capacitor 8A. Since the air is efficiently guided to the capacitor 8A by the stator blade 422A as described above, the air is also efficiently guided to the FETs 9A and 9B similarly to the capacitor 8A. The FETs 9 may be disposed at both adjacent positions in the radial direction of the capacitor 8, or may be disposed at other positions at which the FETs 9 can be cooled.

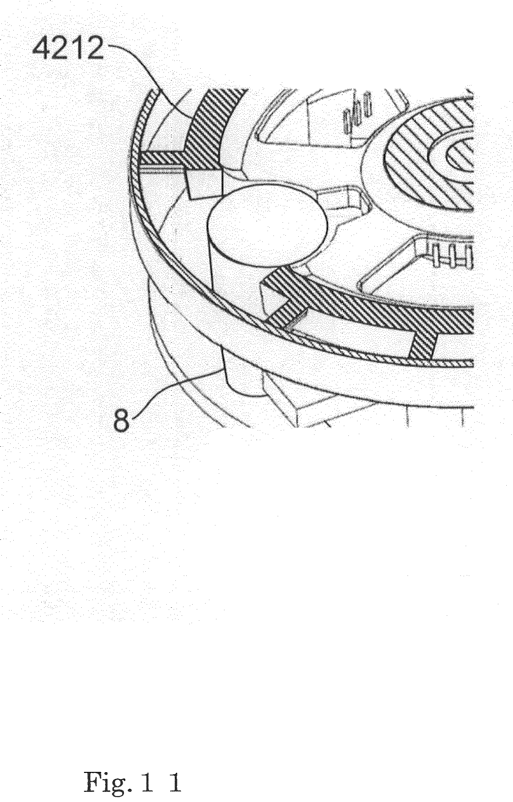

As described above, the motor housing 4 forms the first flow passage FW1 and includes the cylindrical portion 4212 extending in the up-down direction. In Fig. 10 described above, a portion of each capacitor 8 is disposed at the outer side in the radial direction with respect to the cylindrical portion 4212 while a portion of the capacitor 8 is disposed at the inner side in the radial direction with respect to the cylindrical portion 4212 in plan view. It is not limited thereto. As illustrated in Fig. 11, the position of an outer end in the radial direction of each capacitor 8 may be aligned with the position in the radial direction of an outer surface in the radial direction of the cylindrical portion 4212 while a portion of the capacitor 8 is disposed at the inner side in the radial direction with respect to the cylindrical portion 4212 in plan view. With this configuration, the airflow passing through the first flow passage FW1 flows along an outer side surface of the capacitor 8. Accordingly, the capacitor 8 can be efficiently cooled. Also, collision of the airflow with the upper surface of the capacitor 8 is restricted, and hence generation of noise can be restricted.

In case of the above-described embodiment, the airflow can be guided along the outer side surface of the capacitor 8 even when the capacitor 8 is disposed on the lower surface of the substrate 7.

As described above, the motor housing 4 has the inlet port W extending therethrough in the radial direction. The inlet port W communicates with the extending portion F2. That is, the motor housing 4 has the inlet port W extending therethrough in the radial direction and communicating with the first flow passage FW1.

Part of the airflow AR circulating in the first flow passage FW1 flows into a second flow passage FW2 via the inlet port W (Fig. 3). The second flow passage FW2 is a space formed between the inner peripheral surface of the upper housing 41 and the stator 51. The airflow AR flowing into the second flow passage FW2 circulates upward and flows into a space JK located above the stator 51. The airflow AR flowing into the space JK circulates downward through a gap and so forth between adjacent coils 512, and is discharged to the outside via the air outlet port 421D of the lower housing 42. Accordingly, hear due to the stator 51 unlikely stays in the motor housing 4, and the cooling efficiency of the stator 51 can be increased.

At this time, since the base 421B is disposed above the capacitor 8, the air heated by the stator 51 is blocked by the base 421B, and is prevented from being guided to the capacitor 8. Accordingly, a decrease in cooling efficiency of the capacitor 8 can be restricted.

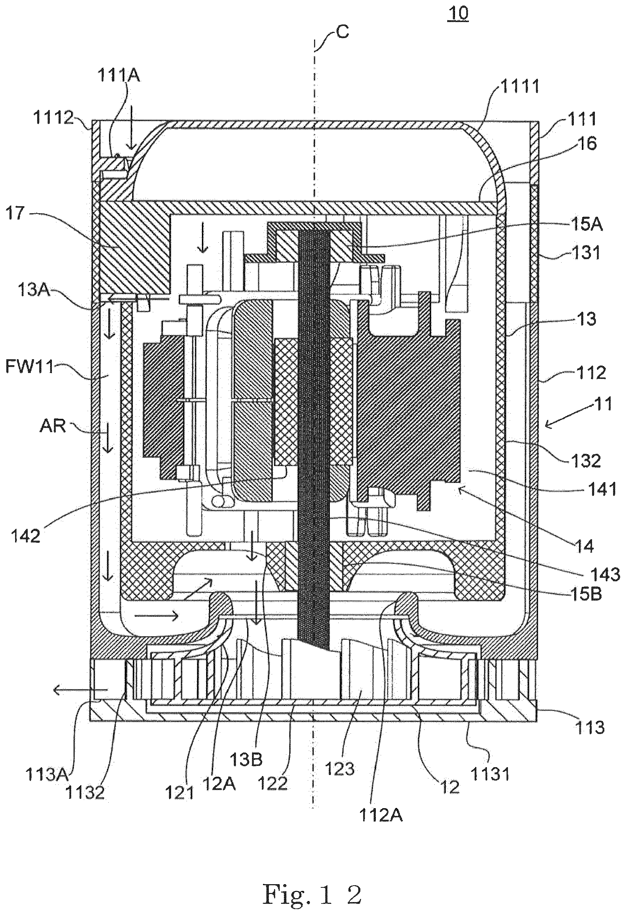

Next, a blower according to another embodiment is described. Fig. 12 is a side-surface cross-sectional view of a blower 10 according to another embodiment.

The blower 10 mainly includes a fan casing 11, an impeller 12, a motor housing 13, a motor 14, an upper bearing 15A, a lower bearing 15B, a substrate 16, and a capacitor 17.

The fan casing 11 includes an upper cover part 111, a casing part 112, and a lower cover part 113. The upper cover part 111 has a dorm-shaped base part 1111, and a ring-shaped part 1112 surrounding the base part 1111. An air inlet port 111A is formed as a gap between the base part 1111 and the ring-shaped part 1112.

The casing part 112 has a cylindrical shape having a bottom portion at the lower side. The casing part 112 has a vent portion 112A at the center of the bottom portion. The vent portion 112A is open in the up-down direction. The lower cover part 113 has a disk-shaped substrate portion 1131, and a plurality of curved wall-shaped guide portions 1132 arrayed in the circumferential direction on an upper surface of the substrate portion 1131. The guide portions 1132 guide the air outward in the radial direction. An air outlet port 113A is formed by outer end portions of the adjacent guide portions 1132. That is, a plurality of air outlet ports 113A are arrayed in the circumferential direction at an outer end portion in the radial direction of the lower cover part 113.

The impeller 12 includes a lid part 121 having an air inlet port 12A, a disk-shaped part 122 disposed below the lid part 121, and a plurality of blade parts 123 arrayed in the circumferential direction between the lid part 121 and the disk-shaped part 122. The impeller 12 is housed in a center portion of the lower cover part 113.

The motor housing 13 located above the impeller 12 includes a cylindrical upper housing part 131, and a cylindrical lower housing part 132 coupled to the lower side of the upper housing part 131 and having a smaller diameter in cross section than that of the upper housing part 131. The upper housing part 131 and the lower housing part 132 are formed as the same member. A vent portion 13A opening in the up-down direction is provided at the boundary between the upper housing part 131 and the lower housing part 132, at which the upper housing part 131 is coupled to the lower housing part 132. Also, a vent portion 13B opening in the up-down direction is provided at a bottom portion of the lower housing part 132.

The motor housing 13 is housed in the fan casing 11. The motor housing 13 houses the motor 14. The motor 14 is disposed above the impeller 12. The motor 14 is of inner rotor type, and includes a stator 141, a rotor 142 disposed at the inner side in the radial direction of the stator 141, and a shaft 143 fixed to the rotor 142.

The shaft 143 extending in the up-down direction is rotatably held by the upper bearing 15A and the lower bearing 15B. A lower end portion of the shaft 143 is fixed to the impeller 12. The impeller 12 is rotationally driven by the motor 14 around the central axis C. For the convenience of understanding, Fig. 12 omits illustration of a fixing cross section of the shaft 143 and the impeller 12.

The disk-shaped substrate 16 is fixed to an opening lower surface of the base part 1111 of the upper cover part 111. Three capacitors 17 are arrayed in the circumferential direction on a lower surface of the substrate 16.

An operation during driving of the blower 10 with the above-described configuration is described. When the impeller 12 is rotationally driven around the central axis C by the motor 14, the air AR is sucked into the air inlet port 111A from above the blower 10. The sucked air AR is sent into the space below the substrate 16, in which the stator 141 is provided. Part of the sent air AR passes through the vent portion 13A, and is sent to a flow passage FW11 formed between an inner wall surface of the casing part 112 and an outer wall surface of the lower housing part 132. The sent air AR circulates downward in the flow passage FW11, passes above the bottom portion of the casing part 112, and passes downward through the vent portion 112A. Further, the air AR is sucked downward from the air inlet port 12A of the impeller 12, is guided outward in the radial direction by the blade part 123, is further guided outward in the radial direction by the guide portion 1132 of the lower cover part 113, and is discharged to the outside from the air outlet port 113A.

In this case, a portion of the capacitor 17 overlaps the first flow passage FW11 in plan view. Accordingly, the air AR flowing into the flow passage FW11 also contacts the capacitor 17, and hence can efficiently cool the capacitor 17.

As described above, the blower 10 according to this embodiment includes the impeller 12, the motor 14, the motor housing 13, the fan casing 11, and the substrate 16. The impeller 12 rotates around the central axis C extending in the up-down direction. The motor 14 is disposed at one side in the up-down direction with respect to the impeller 12, and rotates the impeller 12. The motor housing 13 houses the motor 14. The fan casing 11 houses the impeller 12 and the motor housing 13, and forms the first flow passage FW11 between the fan casing 11 and the motor housing 13. The substrate 16 is disposed at the one side in the up-down direction with respect to the impeller 12.

One end portion and the other end portion in the up-down direction of the fan casing 11 respectively have a first opening (111A) and a second opening (113A). The first opening and the second opening communicate with one another via the first flow passage FW11. The capacitor 17 is disposed on the substrate 16. At least a portion of the capacitor 17 overlaps the first flow passage FW11 in plan view.

As described above, a cleaner 100 according to this embodiment includes the above-described blower. Accordingly, a cleaner capable of efficiently cooling the capacitor in the blower can be provided. The object to which the blower is applied is not limited to the cleaner. The blower may be installed in any one of office automation equipment, medical equipment, a transportation system, or home-use electrical appliances other than the cleaner.

The present disclosure can be used for, for example, a blower for a cleaner.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A blower (1) comprising:
an impeller (3) that rotates around a central axis (C) extending in an up-down direction;
a motor (5) that is disposed at one side in the up-down direction with respect to the impeller (3), and rotates the impeller (3);
a motor housing (4) that houses the motor (5);
a fan casing (2) that houses the impeller (3) and the motor housing (4), and forms a first flow passage (FW1) between the fan casing (2) and the motor housing (4); and
a substrate (7) disposed at the one side in the up-down direction with respect to the impeller (3),
wherein one end portion and the other end portion in the up-down direction of the fan casing (2) respectively have a first opening (22) and a second opening (211), the first opening (22) communicating with the second opening (211) via the first flow passage (FW1), a capacitor (8) being disposed on the substrate (7), and
wherein at least a portion of the capacitor (8) overlaps the first flow passage (FW1) in plan view.

2. The blower (1) according to claim 1,
wherein the first flow passage (FW1) has a curved portion (F1) extending in the up-down direction and outward in a radial direction from an outer end portion in the radial direction of the impeller (3), and an extending portion (F2) communicating with the curved portion (F1) and extending in the up-down direction.

3. The blower (1) according to claim 1 or 2,
wherein the capacitor (8) is disposed on a surface at the other side in the up-down direction of the substrate (7) .

4. The blower (1) according to any one of claims 1 to 3,
wherein the motor housing (4) has a cylindrical portion (4212) forming the first flow passage (FW1) and extending in the up-down direction, and at least a portion of the capacitor (8) is disposed at an inner side in the radial direction of the cylindrical portion (4212) in plan view.

5. The blower (1) according to any one of claims 1 to 4,
wherein the motor housing (4) has a cylindrical portion (4212) forming the first flow passage (FW1) and extending in the up-down direction, and a position in the radial direction of an outer end in the radial direction of the capacitor (8) is aligned with a position in the radial direction of an outer surface in the radial direction of the cylindrical portion (4212) in plan view.

6. The blower (1) according to any one of claims 1 to 5,
wherein a plurality of stator blades (422) are disposed in a circumferential direction on an outer surface of the motor housing (4).

7. The blower (6) according to claim 6,
wherein at least a portion of the capacitor (8) faces at least one of the stator blades in the up-down direction.

8. The blower (1) according to any one of claims 1 to 7,
wherein the motor housing (4) has a motor-housing recess (421C) recessed in the up-down direction, and at least a portion of the capacitor (8) is housed in the motor-housing recess (421C).

9. The blower (1) according to any one of claims 1 to 8,
wherein the motor housing (4) has an inlet port (W) extending therethrough in the radial direction and communicating with the first flow passage (FW1).

10. The blower (1) according to any one of claims 1 to 9,
wherein a field-effect transistor (9) is disposed on a surface of the substrate (7) on which the capacitor (8) is disposed, at a position near the capacitor (8).

11. A cleaner (100) comprising the blower (1) according to any one of claims 1 to 10.
